# EUROPÄISCHE PATENTSCHRIFT

(11) **EP 3 383 632 B1**
(45) Veröffentlichungstag und Bekanntmachung des Hinweises auf die Patenterteilung: **20.03.2024**
(21) Anmeldenummer: 16805365.0
(22) Anmeldetag: 29.11.2016
(51) Int. Cl.: B29D 11/00, G02B 17/08

(54) **VERFAHREN UND VORRICHTUNG ZUR HERSTELLUNG EINES OPTISCHEN BAUTEILS MIT MINDESTENS DREI MONOLITHISCH ANGEORDNETEN OPTISCHEN FUNKTIONSFLÄCHEN UND OPTISCHES BAUTEIL**
METHOD AND DEVICE FOR PRODUCING AN OPTICAL COMPONENT HAVING AT LEAST THREE MONOLITHICALLY ARRANGED OPTICAL FUNCTIONAL SURFACES, AND OPTICAL COMPONENT
PROCÉDÉ ET DISPOSITIF DE FABRICATION D'UN ÉLÉMENT OPTIQUE COMPRENANT AU MOINS TROIS SURFACES FONCTIONNELLES OPTIQUES AGENCÉES DE FAÇON MONOLITHIQUE ET ÉLÉMENT OPTIQUE

(30) Priorität: 01.12.2015 DE 102015120853
(43) Veröffentlichungstag der Anmeldung: 10.10.2018
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: BEIER, Matthias, 99423 Weimar (DE); HARTUNG, Johannes, 07743 Jena (DE); DAMM, Christoph, 07743 Jena (DE); RISSE, Stefan, 07743 Jena (DE); SATZER, Britta, 07745 Jena (DE)
(74) Vertreter: Epping - Hermann - Fischer
(86) Internationale Anmeldenummer: PCT/EP2016/079116
(87) Internationale Veröffentlichungsnummer: WO 2017/093242

(56) Entgegenhaltungen:
- EP-A1- 0 440 578
- EP-A2- 0 845 692
- WO-A1-2012/045177
- DE-B3-102009 041 501
- JP-A- H11 174 331
- US-A1- 2010 188 856

## Beschreibung

Die Erfindung betrifft ein Verfahren zur Herstellung eines optischen Bauteils mit mindestens drei monolithisch angeordneten optischen Funktionsflächen.

Diese Patentanmeldung beansprucht die Priorität der deutschen Patentanmeldung 10 2015 120 853. 9.

Ein Verfahren zur Fertigung einer optischen Anordnung mit mindestens zwei optischen Funktionsflächen auf einem gemeinsamen Tragkörper wird in der Druckschrift DE 10 2009 041 501 B3 beschrieben. Das Verfahren eignet sich insbesondere für die Herstellung von zwei optischen Funktionsflächen, welche ohne ein Lösen des Bauteils von der Bearbeitungsmaschine in einem gemeinsamen oder in sukzessiven Fertigungsschritten hergestellt werden. Dieses Verfahren eignet sich insbesondere für die Herstellung von reflektiven optischen Spiegelflächen.

Insbesondere für transmissiv arbeitende optische Geräte ist es jedoch erforderlich, auf mehreren Seitenflächen eines Grundkörpers optische Funktionsflächen anzuordnen und herzustellen. Diese Flächen können entweder refraktive, reflektive oder durch Aufbringung einer Mikrostruktur auch diffraktive optische Eigenschaften besitzen. Für bestimmte optische Elemente und Geräte kann es weiterhin von Vorteil sein, mehrere Funktionalitäten in ein einzelnes optisches Bauteil zu integrieren, so dass beispielsweise eine einzige Seite eines gemeinsamen Tragkörpers in mehrere optisch wirksame Teilbereiche aufgeteilt wird, die jeweils unterschiedliche geometrische Grundformen besitzen. Von besonderem Interesse sind dabei optische Bauteile, die solche Flächenanordnungen auf mindestens zwei unterschiedlichen Seiten des optischen Bauteils besitzen, da so einzelne Flächen als refraktive und andere als reflektive optische Elemente wirken können.

Die Druckschrift JP H11 174331 A betrifft ein Bildaufnahmegerät, beispielsweise für eine CCD-Kamera und einen Sensor für die Montage in einem Flugzeug.

In der Druckschrift US 2010/188856 A1 sind mehrfach reflektierende Linsen und Linsensysteme angegeben.

In der Druckschrift EP 0 440 578 A1 ist eine Vorrichtung zur Herstellung einer Formgebungsfläche an einem Formwerkzeug für die Fertigung optischer und ophthalmischer Linsen beschrieben.

Die Druckschrift EP 0 845 692 A2 betrifft ein optisches System mit einer nicht rotationssymmetrisch gekrümmten Oberfläche.

Eine zu lösende Aufgabe besteht somit darin, ein Verfahren anzugeben, mit dem ein optisches Bauteil mit mindestens drei, insbesondere nicht zu einer gemeinsamen Achse rotationssymmetrischen, aber in fester Lagebeziehung zueinander monolithisch auf zwei verschiedenen Seiten des optischen Bauteils angeordneten optischen Funktionsflächen, mit möglichst hohen Genauigkeiten, möglichst geringem Aufwand und möglichst kurzer Bearbeitungszeit, hergestellt werden kann.

Diese Aufgabe wird durch ein Verfahren gemäß dem unabhängigen Patentanspruch 1 gelöst. Vorteilhafte Ausgestaltungen und Weiterbildungen der Erfindung sind Gegenstand der abhängigen Ansprüche.

Gemäß zumindest einer Ausführungsform des Verfahrens wird ein optisches Bauteil hergestellt, dass mindestens drei monolithisch angeordnete optische Funktionsflächen aufweist. "Monolithisch angeordnet" bedeutet insbesondere, dass die optischen Funktionsflächen untrennbar in fester Lagebeziehung zueinander angeordnet sind. Das optische Bauteil bildet insbesondere einen gemeinsamen Grundkörper für die mindestens drei optischen Funktionsflächen aus. Die optischen Funktionsflächen werden bei dem Verfahren insbesondere dadurch hergestellt, dass Oberflächen des Grundkörpers des optischen Bauteils durch eine Bearbeitungsmaschine bearbeitet werden, um die optischen Funktionsflächen in der gewünschten Form und Lage und in der geforderten optischen Qualität an dem Grundkörper auszubilden. Insbesondere können mit dem Verfahren optische Funktionsflächen an dem optischen Bauteil hergestellt werden, die zu einer gemeinsamen Bezugsachse nicht rotationssymmetrisch sind.

Die optischen Funktionsflächen umfassen eine erste optische Funktionsfläche und eine zweite optische Funktionsfläche auf einer ersten Seite des optischen Bauteils und mindestens eine weitere optische Funktionsfläche auf einer zweiten Seite des optischen Bauteils. Die erste Seite und die zweite Seite des optischen Bauteils können insbesondere einander gegenüberliegen. Es werden beispielsweise mindestens zwei optische Funktionsflächen an einer ersten Seitenfläche eines Grundkörpers des optischen Bauteils und eine oder mehrere weitere optischen Funktionsflächen an einer gegenüberliegenden zweiten Seitenfläche des Grundkörpers erzeugt. Der Grundkörper des optischen Bauteils ist vorzugsweise transparent für die elektromagnetische Strahlung, für die das optische Bauteil verwendet werden soll.

Das Verfahren umfasst vorteilhaft das Berechnen eines stetigen Flächenverbunds, der die erste optische Funktionsfläche und die zweite optische Funktionsfläche umfasst. Mit anderen Worten wird ein zusammenhängender Flächenverbund errechnet, der die auf der ersten Seite des optischen Bauteils angeordneten optischen Funktionsflächen beinhaltet. In den Bereichen der ersten und zweiten optischen Funktionsfläche weist der berechnete Flächenverbund die gewünschte Form der optischen Funktionsflächen, insbesondere deren Höheninformation in einem geeigneten Koordinatensystem, auf. Weiterhin kann der berechnete Flächenverbund mindestens einen Zwischenbereich enthalten, der durch Interpolation der optischen Funktionsflächen über ihre Ränder hinaus errechnet wird. Das Berechnen des Flächenverbunds kann mindestens einen vorgelagerten Rechenschritt umfassen, bei dem die optischen Funktionsflächen, deren Höhenprofil gegebenenfalls zunächst nur jeweils in einem lokalen Koordinatensystem vorliegt, in ein für die Bearbeitungsmethode geeignetes Bearbeitungskoordinatensystem überführt werden. Das Bearbeitungskoordinatensystem kann insbesondere als Koordinatensystem für die Herstellung aller optischen Funktionsflächen des optischen Bauteils dienen.

Gemäß zumindest einer Ausführungsform des Verfahrens wird der stetige Flächenverbund auf der ersten Seite des optischen Bauteils durch Bearbeitung mittels einer Bearbeitungsmaschine hergestellt. Auf diese Weise werden vorteilhaft die erste optische Funktionsfläche und die zweite optische Funktionsflächen im gleichen Bearbeitungsschritt in definierter Form und definierter relativer Lage zueinander erzeugt. Ein Vorteil des Herstellens der ersten und zweiten optischen Funktionsflächen in dem Flächenverbund besteht insbesondere darin, dass die Lage der optischen Funktionsflächen zueinander mit einer Genauigkeit im Bereich der Fertigungsgenauigkeit einer optischen Einzelfläche eingestellt werden kann.

Gemäß zumindest einer Ausführungsform des Verfahrens wird in einem weiteren Verfahrensschritt außerhalb der optischen Funktionsflächen und/oder an einer Halterung des optischen Bauteils mindestens eine Referenzfläche oder vorzugsweise mehrere Referenzflächen durch Bearbeitung mit der Bearbeitungsmaschine erzeugt. Die mindestens eine Referenzfläche steht vorteilhaft in definierter Lagebeziehung zu den optischen Funktionsflächen und wird insbesondere mittels der Bearbeitungsmaschine in dem gleichen Bearbeitungskoordinatensystem hergestellt, das für die Herstellung der optischen Funktionsflächen verwendet wird.

In einem weiteren Verfahrensschritt erfolgt vorteilhaft ein Umpositionieren des optischen Bauteils derart, dass die zweite Seite des optischen Bauteils mit der Bearbeitungsmaschine bearbeitet werden kann. Bei dem Umpositionieren dient vorteilhaft die mindestens eine Referenzfläche als Montagefläche oder Anlagefläche. Insbesondere wird das optische Bauteil beim Umpositionieren derart an einer Halterung der Bearbeitungsmaschine angeordnet, dass es mit der mindestens einen Referenzfläche an der Halterung anliegt und/oder montiert wird. Auf diese Weise wird das optische Bauteil vorteilhaft präzise in einer definierten Position auf der Bearbeitungsmaschine angeordnet. Das optische Bauteil wird bei dem Umpositionieren insbesondere derart auf der Bearbeitungsmaschine angeordnet, dass die zweite Seite einem Dreh-, Fräs- oder Hobelwerkzeug der Bearbeitungsmaschine zugewandt ist. Das Umpositionieren kann bei einer möglichen Ausgestaltung ein Umspannen des optischen Bauteils umfassen, wobei das optische Bauteil von einer Halterung gelöst und in einer anderen, beispielsweise um 180° gedrehten, Position wieder mit der Halterung verbunden wird. Alternativ ist es aber auch möglich, dass das optische Bauteil beim Umpositionieren mit der Halterung verbunden bleibt, wobei die mindestens eine Referenzfläche an der Halterung anliegt.

Das Umpositionieren des optischen Bauteils erfolgt insbesondere derart, dass die mindestens eine weitere optische Funktionsfläche im gleichen Bearbeitungskoordinatensystem wie die erste und zweite optische Funktionsfläche bearbeitet werden kann. Das optische Bauteil wird insbesondere derart umpositioniert, dass es sich nach dem Umpositionieren in einer genau definierten und bekannten Position in dem Bearbeitungskoordinatensystem befindet. Dies erfolgt insbesondere dadurch, dass das optische Bauteil bei dem Umpositionieren an der zuvor hergestellten mindestens einen Referenzfläche, die sich in einer definierten Lagebeziehung zu der ersten und zweiten optischen Funktionsfläche befindet, aufgenommen wird, beispielsweise in einer Halterung der Bearbeitungsmaschine. Die mindestens eine Referenzfläche oder vorzugsweise die mehrere Referenzflächen fungieren somit bei dem Umpositionieren des optischen Bauteils vorteilhaft als mindestens eine Anlage- oder Montagefläche(n). Mittels dieser mindestens einen Anlage- oder Montagefläche kann das optische Bauteil hochgenau in dem Bearbeitungskoordinatensystem positioniert werden.

Gemäß zumindest einer Ausführungsform des Verfahrens wird in einem weiteren Verfahrensschritt die mindestens eine weitere optische Funktionsfläche auf der zweiten Seite des optischen Bauteils durch eine Bearbeitung mit der Bearbeitungsmaschine hergestellt. Hierbei ist es von Vorteil, dass sich das optische Bauteil nach dem Umpositionieren in einer genau definierten Position in dem Bearbeitungskoordinatensystem befindet. Auf diese Weise wird es insbesondere ermöglicht, die mindestens eine weitere optische Funktionsfläche in definierter Lage relativ zu der ersten und zweiten optischen Funktionsfläche herzustellen. Mit anderen Worten ist das Umpositionieren des optischen Bauteils unter Verwendung der mindestens einen Referenzfläche maßgeblich für die Qualität der Lagezuordnung zwischen den optischen Funktionsflächen auf der ersten Seite des optischen Bauteils und der mindestens einen weiteren optischen Funktionsfläche auf der zweiten Seite des optischen Bauteils. Die mindestens eine oder vorteilhaft mehreren Referenzflächen werden daher vorzugsweise wie die optischen Funktionsflächen in optischer Qualität hergestellt, beispielsweise durch ein mikrospanendes Verfahren wie einer ultrapräzisen Diamantbearbeitungstechnik.

Gemäß zumindest einer Ausführungsform des Verfahrens erfolgt in einem weiteren Schritt ein Vermessen der Form und Lage der mindestens drei monolithisch angeordneten optischen Funktionsflächen, wobei Informationen zur Abweichung der optischen Funktionsflächen von ihrer Sollform und -lage gewonnen werden. Hierzu kann eine taktile und/oder eine optische Messvorrichtung verwendet werden.

Nachfolgend werden die Schritte der Bearbeitung der ersten und zweiten optischen Funktionsfläche, des Umpositionieren des optischen Bauteils und der Bearbeitung der mindestens einen weiteren optischen Funktionsfläche mindestens einmal wiederholt, wobei die Informationen zur Abweichung der optischen Funktionsflächen von ihrer Sollform und -lage dazu genutzt werden, eine Korrekturbearbeitung der optischen Funktionsflächen zur Reduzierung der ermittelten Abweichung mit der Bearbeitungsmaschine durchzuführen.

Das hierin beschriebene Verfahren ermöglicht es auf diese Weise insbesondere, ein optisches Bauteil mit mindestens drei monolithisch angeordneten optischen Funktionsflächen herzustellen, wobei sich die optischen Funktionsflächen auf mindestens zwei verschiedenen Seiten des optischen Bauteils befinden, und wobei die mindestens drei optischen Funktionsflächen in genau definierter Lage zueinander hergestellt werden. Das Verfahren eignet sich daher insbesondere für komplexe Optiken mit geringer Aperturgröße, beispielsweise in den Technologiebereichen Automotive oder Sensorik. Die Anwendung des Verfahrens ist aber nicht auf geringe Aperturgrößen beschränkt, vielmehr können auch Anordnungen von optischen Funktionsflächen mit großen Aperturen und speziellen Abbildungseigenschaften mit dem Verfahren hergestellt werden.

Die Schritte des Vermessens der Form und Lage der optischen Funktionsflächen sowie die Schritte der nachfolgenden Korrekturbearbeitung können gegebenenfalls mehrfach wiederholt werden, bis die Abweichung der optischen Funktionsflächen von ihrer Sollform und -Lage eine vorgegebene Toleranz unterschreitet.

Es kann bei dem Verfahren vorgesehen sein, mehrere gleichartige optische Bauteile herzustellen. In diesem Fall kann die Korrekturbearbeitung an einem ersten optischen Bauteil durchgeführt werden, um nach Unterschreitung der messtechnisch ermittelten Abweichungen von den vorgegebenen Sollwerten eine Vielzahl von gleichartigen optischen Bauteilen durch das Verfahren herzustellen, wobei die Unterschreitung der messtechnisch ermittelten Abweichungen von den vorgegebenen Sollwerten für alle optischen Funktionsflächen an allen gleichartigen optischen Bauteilen durch die Reproduzierbarkeit des Verfahrens sichergestellt ist, sodass weitere iterative Korrekturbearbeitungen an den verschiedenen gleichartigen optischen Bauteilen nicht nötig sind.

Die Bearbeitung der optischen Funktionsflächen und/oder der mindestens einen Referenzfläche bei der Herstellung und/oder der Korrekturbearbeitung erfolgt bei dem Verfahren vorzugsweise durch einen materialabtragen Prozess, insbesondere durch ein mikrospanendes Verfahren. Der materialabtragende Prozess kann zum Beispiel ein Dreh-, Fräs-, Hobel-, Schleif- oder Polierprozess sein oder eine Kombination mehrerer dieser Prozesse umfassen.

Gemäß zumindest einer Ausführungsform des Verfahrens weist die Bearbeitungsmaschine ein Drehwerkzeug auf, das vorzugsweise einen Diamanten als spanabhebendes Element aufweist. Die Bearbeitung der optischen Funktionsflächen und/oder der mindestens einen Referenzfläche bei der Herstellung und/oder der Korrekturbearbeitung kann in diesem Fall zumindest teilweise durch das Drehwerkzeug der Bearbeitungsmaschine durchgeführt werden.

Alternativ oder zusätzlich kann die Bearbeitungsmaschine ein Fräswerkzeug oder Hobelwerkzeug aufweisen, sodass die Herstellung und/oder Korrekturbearbeitung der optischen Funktionsflächen oder der mindestens einen Referenzfläche zumindest teilweise durch das Fräs- oder Hobelwerkzeug erfolgen kann. Das Fräswerkzeug oder Hobelwerkzeug weist vorzugsweise einen Diamanten als spanabhebendes Element auf. Die Bearbeitung der optischen Funktionsflächen und/oder der mindestens einen Referenzfläche kann auch durch eine aufeinanderfolgende oder abwechselnde Anwendung eines Dreh-, Fräs- und/oder Hobelwerkzeugs der Bearbeitungsmaschine erfolgen.

Die Bearbeitung der optischen Funktionsflächen und/oder der mindestens einen Referenzfläche bei der Herstellung und/oder der Korrekturbearbeitung mit der Bearbeitungsmaschine kann zusätzlich oder alternativ einen Schleif- oder Polierprozess oder einen anderen das optische Bauteil kontaktierenden oder nicht kontaktierenden materialabtragenden Prozess umfassen.

Gemäß zumindest einer Ausgestaltung des Verfahrens sind zumindest zwei der optischen Funktionsflächen als transmissive optische Flächen ausgebildet. Die transmissiven optischen Funktionsflächen können bei dem Verfahren insbesondere an einem zumindest teilweise transparenten Grundkörper des optischen Bauteils ausgebildet werden. Die transmissiven optischen Funktionsflächen können insbesondere eine refraktive Wirkung haben und beispielsweise als Linsen ausgebildet sein.

Bei einer weiteren vorteilhaften Ausgestaltung ist zumindest eine der optischen Funktionsflächen als Spiegelfläche ausgebildet und wirkt somit reflektiv.

Weiterhin ist es möglich, dass mindestens eine der optischen Funktionsflächen als diffraktives optisches Element wirkt. Beispielsweise weist mindestens eine der optischen Funktionsflächen eine Mikrostruktur auf. Die optische Funktionsfläche bildet in diesem Fall insbesondere ein transmissives oder reflektives Gitter aus.

Die optischen Funktionsflächen können bei dem Verfahren plan oder konkav oder konvex oder freigeformt oder mit einer Kombination solcher Formen gebildet werden. Gemäß einer vorteilhaften Ausgestaltung werden mit dem Verfahren optische Funktionsflächen hergestellt, die zu einer gemeinsamen Bezugsachse nicht rotationssymmetrisch sind.

Die mindestens eine bei dem Verfahren hergestellte Referenzfläche wird vorzugsweise als Zylinderfläche oder Planfläche ausgebildet. Die Referenzfläche wird vorzugsweise im gleichen Bearbeitungskoordinatensystem wie die optischen Funktionsflächen definiert. Die mindestens eine außerhalb der optischen Funktionsflächen erzeugte Referenzfläche kann als Referenz-, Mess-, oder Anlagefläche für Mess- und/oder Montageprozesse des optischen Bauteils oder weiteren Bauelementen genutzt werden.

Es wird weiterhin ein optisches Bauteil angegeben, dass mit dem zuvor beschriebenen Verfahren herstellbar ist. Das optische Bauteil weist insbesondere mindestens drei zu einer gemeinsamen Bezugsachse nicht rotationssymmetrische optische Funktionsflächen auf, die sich auf mindestens zwei verschiedenen Seiten des optischen Bauteils befinden. Weitere vorteilhafte Ausgestaltungen des optischen Bauteils ergeben sich aus der vorherigen Beschreibung des Verfahrens.

Das optische Bauteil kann Bestandteil eines optischen Geräts sein. Eine Position und Orientierung des optischen Bauteils in dem optischen Gerät ist vorzugsweise durch zumindest eine Anlagefläche festgelegt, die mit dem optischen Bauteil, bevorzugt mit optischer Genauigkeit, hergestellt ist und an der das optische Bauteil in dem optischen Gerät anliegt.

Eine Vorrichtung zur Durchführung eines Verfahrens umfasst eine Bearbeitungsmaschine zum Herstellen der mindestens drei optischen Funktionsflächen und der mindestens einen Referenzfläche sowie eine Messvorrichtung zum Vermessen der Funktionsflächen. Die Messvorrichtung ist bei einer vorteilhaften Ausgestaltung in die Bearbeitungsvorrichtung integriert.

Das Verfahren, das mit dem Verfahren herstellbare optische Bauteil und eine zur Durchführung des Verfahrens geeignete Vorrichtung werden im Folgenden anhand von Ausführungsbeispielen im Zusammenhang mit den Figuren 1 bis 4 näher erläutert.

Es zeigen:
Fig. 1a und Fig. 1b zwei Ansichten eines optischen Bauteils mit vier optischen Funktionsflächen bei einem Ausführungsbeispiel des Verfahrens,
Fig. 2a und Fig. 2b das optische Bauteil auf einer zur Durchführung des Verfahrens geeigneten Vorrichtung,
Fig. 3a und Fig. 3b eine beispielhafte Darstellung eines Flächenverbunds aus zwei optischen Funktionsflächen bei einem Ausführungsbeispiel des Verfahrens, und
Fig. 4a und Fig. 4b einen Messaufbau zur Erfassung der Lage- und Formabweichungen der optischen Funktionsflächen und Referenzflächen bei einem Ausführungsbeispiel des Verfahrens.

Gleiche oder gleich wirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

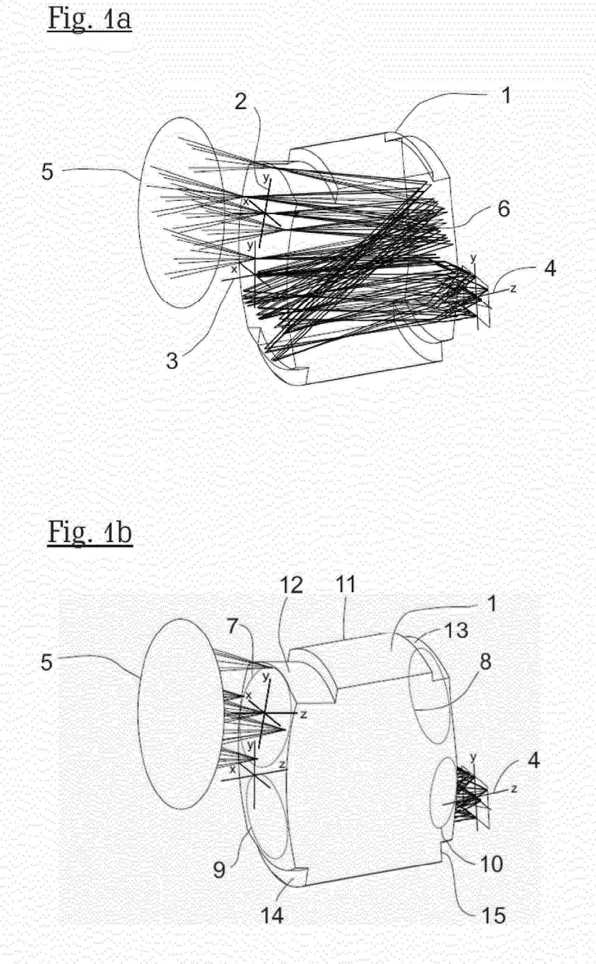

Fig. 1a und Fig. 1b zeigen ein Ausführungsbeispiel eines optischen Bauteils 1, das mit dem Verfahren hergestellt wird. Fig. 1a zeigt in isometrischer Ansicht das optische Bauteil 1 mit dem Strahlengang 6 in dem optischen Bauteil 1. Das optische Bauteil 1 ist ein abbildendes System, das ein Bildfeld 5 auf eine Detektorebene 4 abbildet. Für die Aufnahme des durch das optische Bauteil 1 abgebildeten Bildfeldes 5 kann zum Beispiel ein optischer Detektor in der Bildebene 4 platziert werden.

Wie in Fig. 1b zu sehen, weist das optische Bauteil insgesamt vier optische Funktionsflächen 7, 8, 9, 10 auf. Eine erste optische Funktionsfläche 7 und eine zweite optische Funktionsfläche 9 sind auf einer ersten Seite des optischen Bauteils 1 angeordnet. Auf einer der ersten Seite gegenüberliegenden zweiten Seite weist das optische Bauteil zwei weitere optische Funktionsflächen 8, 10 auf.

Die optischen Funktionsflächen 7, 8, 9, 10 können in lokalen Koordinatensystemen definiert sein, welche im Allgemeinen eine von einem Eingangskoordinatensystem 2 abweichende Orientierung aufweisen. Bei dem Verfahren wird vorzugsweise durch mathematische Optimierung mindestens ein Bearbeitungskoordinatensystem 3 eingeführt, welches für den Herstellungsprozess verwendet wird. Insbesondere bei der Herstellung des optisches Bauteils als Drehteil, kann die Optimierung zur Festlegung des Bearbeitungskoordinatensystems 3 so durchgeführt werden, dass alle optischen Funktionsflächen 7, 8, 9, 10 zu einer gemeinsamen Drehachse bearbeitet werden können.

Es ist bei dem Verfahren vorteilhaft, aber nicht zwingend notwendig, dass für die Fertigung der optischen Funktionsflächen 7, 9 auf der ersten Seite und der optischen Funktionsflächen 8, 10 auf der zweiten Seite des optischen Bauteils 1 ein gemeinsames Bearbeitungskoordinatensystem 3 verwendet wird. Vielmehr können die optischen Funktionsflächen auf den gegenüberliegenden Seiten des optischen Bauteils auch in unterschiedlichen Bearbeitungskoordinatensystemen gefertigt werden.

Bei dem in den Figuren 1a und 1b dargestellten Ausführungsbeispiel ist vorgesehen, die in lokalen Koordinatensystemen definierten optischen Funktionsflächen 7, 8, 9, 10 durch Koordinatentransformation in ein gemeinsames Bearbeitungskoordinatensystem 3 zu überführen. Im Allgemeinen besitzen die optischen Funktionsflächen 7, 8, 9, 10 zu einer gemeinsamen Bearbeitungsachse nun keine Rotationssymmetrie mehr, auch wenn die optische Grundform z.B. rotationssymmetrisch sphärisch oder asphärisch gestaltet ist. Vielmehr liegen nach der Transformation ins Bearbeitungskoordinatensystem 3 nun die Höheninformationen der einzelnen optischen Funktionsflächen 7, 8, 9, 10 mit hoher Genauigkeit in dem Bearbeitungskoordinatensystem 3 vor.

Die Herstellbarkeit der nun in Bezug zum Bearbeitungskoordinatensystem 3 unsymmetrischen (im Folgenden als "freigeformt" und/oder "Freiform" bezeichnet) optischen Funktionsflächen 7, 8, 9, 10 ist abhängig vom konkreten Fertigungsprozess und dessen Möglichkeit, optische Flächen mit Abweichungen von einer rotationssymmetrischen Grundform zu erzeugen.

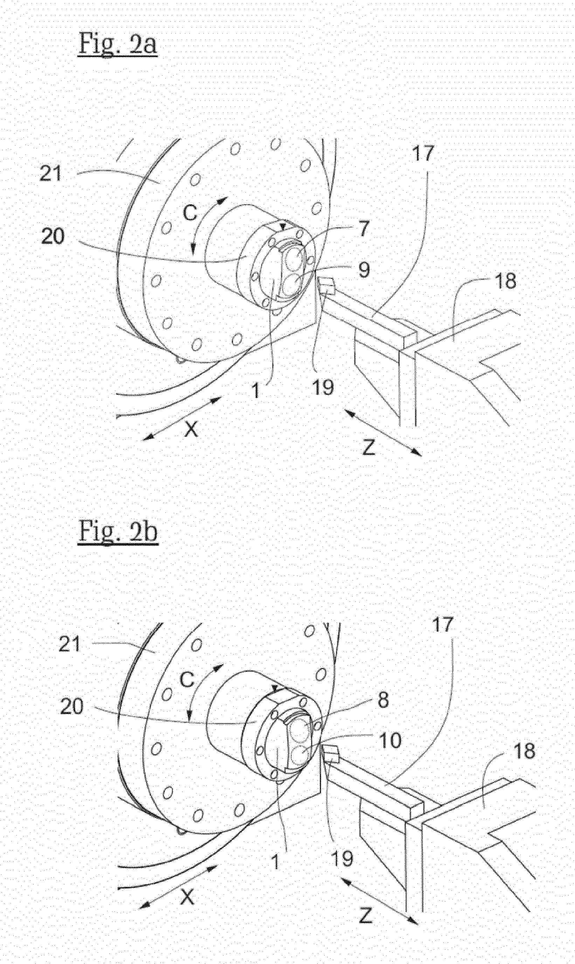

In besonders vorteilhafter Weise können servogestützte Ultrapräzisionsdrehverfahren basierend auf dem Einsatz von Diamantwerkzeugen zum Einsatz kommen. Für die folgenden Erläuterungen wird daher eine Fertigung mit Diamantbearbeitungstechniken angenommen, die zum Beispiel unter den Bezeichnungen STS (Slow-Tool-Servo) oder FTS (Fast-Tool-Servo) bekannt sind. Bei dem Verfahren können aber auch andere Freiformbearbeitungsmethoden der Ulträpräzisionsbearbeitung mit Diamantwerkzeugen, wie ultrapräzises Fräsen und Hobeln eingesetzt werden. STS und FTS stellen spezielle Freiformbearbeitungstechniken der drehenden Bearbeitung dar, bei denen eine der Maschinenhauptspindel parallele Zustellachse (Z-Achse, siehe Fig. 2a, 2b) spindelsynchron in axialer Richtung bewegt wird, um eine in polarer Richtung definierte Abweichung von einer rotationssymmetrischen Form zu erzeugen. Je nach dem Grad der gewünschten Asymmetrie kann dies entweder die maschineneigene Zustellachse (STS) oder eine weitere, redundante und zusätzlich montierte Linearachse (FTS) sein. Die Eigenheiten der unterschiedlichen Verfahren STS und FTS sind dem Fachmann an sich bekannt und sollen an dieser Stelle nicht weiter erläutert werden.

Bei dem Verfahren werden vorteilhaft mindestens zwei der optischen Funktionsflächen in einem gemeinsamen Bearbeitungsschritt gefertigt. Bei dem Ausführungsbeispiel der Fig. 1b werden zum einen die optischen Funktionsflächen 7, 9 auf der ersten Seite und zum anderen die Flächen 8, 10 auf der zweiten Seite jeweils in einem gemeinsamen Bearbeitungsschritt hergestellt. Ein besonderer Vorteil dieses Verfahrens besteht darin, dass nun die Lage der optischen Funktionsflächen zueinander mit einer Genauigkeit im Bereich der Fertigungsgenauigkeit einer optischen Einzelfläche eingestellt werden kann. Nach der initialen Bearbeitung eines ersten Flächenverbundes, beispielsweise der optischen Funktionsflächen 7,9 auf der ersten Seite, sieht es das Verfahren weiterhin vor, auch die weiteren optischen Funktionsflächen 8, 10 in Bezug zum ersten Flächenverbund 7, 9 zu bearbeiten. Dies geschieht in vorteilhafter Weise durch ein Umpositionieren des optischen Bauteils 1, wobei das optische Bauteil vorteilhaft an mindestens einer zuvor hergestellten hochqualitativen Referenzfläche 11, die als Montagefläche dient, aufgenommen wird.

Das Umpositionieren des optischen Bauteils ist maßgeblich für die Qualität der Lagezuordnung zwischen den einzelnen Flächenverbünden verantwortlich, weshalb die als Montagefläche dienende mindestens eine Referenzfläche 11 vorteilhafterweise ebenso durch ultrapräzise Diamantbearbeitungstechniken hergestellt wird.

Weiterhin können zusätzliche, definierte Referenz- und Montageflächen durch den gleichen Herstellungsprozess am optischen Bauteil 1 hergestellt werden. Entsprechend Fig. 1b betrifft dies beispielsweise Zylinderflächen 12 und 13, welche zum Beispiel die Lage von möglichen Apertur- und / oder Feldblenden, oder weitere Schnittstellen zur Integration des optischen Bauteils 1 in eine nächsthöhere Systemebene definieren können. Weiterhin können beispielsweise axiale Anschlagflächen 14 und 15 gefertigt werden, welche in exaktem Bezug zum Bearbeitungskoordinatensystem 3 und den optischen Funktionsflächen 7, 8, 9, 10 stehen.

Fig. 2a und Fig. 2b zeigen ein Beispiel einer Vorrichtung zur Herstellung des in den Figuren Fig. 1a und Fig. 1b dargestellten optischen Bauteils 1. Dazu wird das optische Bauteil 1 auf einer Bearbeitungsmaschine 21 über eine Halterung 20 aufgenommen. Beispielhaft ist die Bearbeitungsmaschine 21 mit zwei linearen Bewegungsachsen X, Z und einer rotatorischen Achse C dargestellt. Das optische Bauteil 1 wird auf der Bearbeitungsmaschine 21 zunächst so montiert, dass eine Bearbeitung der optischen Funktionsflächen 7 und 9 durch einen Drehmeißel 19, montiert auf einem Werkzeughalter 17 und dazugehöriger Aufnahmeeinrichtung 18, ermöglicht wird.

Typischerweise ist die Position des Werkzeugs 19 in Folge eines Einrichtprozesses zur Hauptspindelachse C der Bearbeitungsmaschine 21 mit hoher Genauigkeit bekannt, so dass ein maßlicher Übertrag sowie eine Referenzierung von Werkstück und Werkzeug im Maschinenkoordinatensystem der Bearbeitungsmaschine 21 erfolgen können. Bei dem Verfahren bearbeitet der Drehmeißel 19 nun in einem ersten Bearbeitungsschritt die beiden optischen Funktionsflächen 7, 9 in einem einzigen mikrospanenden Drehprozess. Weiterhin können mindestens eine oder mehrere Montage- und Referenzflächen 11, 12, 13, 14, 15 entsprechend den Figuren Fig. 1a und Fig. 1b durch das gleiche Drehwerkzeug 19 oder ein zusätzliches, vorzugsweise in die Bearbeitungsmaschine 21 integriertes, Dreh- oder Fräswerkzeug, gefertigt werden.

Nach der Bearbeitung des ersten Flächenverbundes umfassend die optischen Funktionsflächen 7, 9, wird das optische Bauteil 1 derart umpositioniert, dass die zweite Seite des optischen Bauteils bearbeitet werden kann. Hierzu wird das optische Bauteil bei dem Ausführungsbeispiel umgespannt, indem es aus der Halterung 20 gelöst und so montiert wird, dass für den folgenden zweiten Bearbeitungsschritt nun die optischen Funktionsflächen 8, 10 dem Werkzeug 19 zugewandt sind (Fig. 2b). Das Umspannen erfolgt mittels vorzugsweise ebenfalls durch Ulträpräzisionsbearbeitung hergestellten Referenzflächen, deren Oberflächenqualität und Maße bekannt sind. Die Ausrichtung und Referenzierung des Bauteils in der Bearbeitungsmaschine 21 erfolgt für den zweiten Flächenverbund 8, 10 in vorteilhafter Weise analog zur Referenzierung der Flächen 7, 9, insbesondere anhand mindestens einer der im ersten Fertigungsschritt hergestellten Referenzflächen 11, 12, 13, 14, 15, wie z.B. Zylinderflächen. Nach erfolgter Referenzierung erfolgt eine Bearbeitung der optischen Funktionsflächen 8, 10 auf der zweiten Seite des optischen Bauteils 1 in einem gemeinsamen Bearbeitungsschritt durch das Bearbeitungswerkzeug 19.

Durch die Bearbeitung in einem gemeinsamen Herstellungsprozess und dem exakten Umpositionieren des optischen Bauteils 1 unter Zuhilfenahme mindestens einer Referenzfläche können 11, 12, 13, 14, 15 alle vier optischen Funktionsflächen 7, 8, 9, 10 des Ausführungsbeispiels mit hoher Form- und Lagegenauigkeit gefertigt werden. Dies betrifft insbesondere laterale Dezentrierungen und axiale Abstände der Flächen (sog. "Mittendicke" des Bauteils), als auch Winkelbezüge und Formgenauigkeiten der optischen Funktionsflächen 7, 8, 9, 10.

Für die Bearbeitung von jeweils mindestens zwei optischen Funktionsflächen in einem gemeinsamen Bearbeitungsschritt kann die verwendete Bearbeitungsmaschine 21 Informationen für die Zustellpositionen der verwendeten Linear- und Rotationsachsen auf einem gleichmäßig verteiltem Raster, mindestens aber in adäquat kleinen Gitterabständen zur Generierung einer gleichmäßigen Bewegung des Bearbeitungswerkzeuges 19, benötigen. Bei dem Verfahren liegen die Höheninformationen der einzelnen zu bearbeitenden optischen Funktionsflächen 7, 8, 9, 10 vorzugsweise mit hoher Genauigkeit in ihren lokalen Koordinatensystemen vor. Die exakte Flächendefinition folgt dabei oftmals typischen Beschreibungsformen des optischen Designs, wie sphärischen und konischen Flächen, Polynomsystemen oder Spline-Beschreibungen. Nach Festlegung eines (oder mehrerer) Bearbeitungskoordinatensysteme 3 können die Höheninformationen der optischen Funktionsflächen 7, 8, 9, 10 mit hoher Genauigkeit in ein gemeinsames Bearbeitungskoordinatensystem 3 transformiert werden, jedoch beschränken sich die Angaben der Flächenbeschreibungen weiterhin auf die Bereiche der einzelnen freien Aperturen der optischen Funktionsflächen bzw. mögliche Randbereiche. Die Formen der Aperturen können dabei rund, oval, rechteckig, hexagonal oder auch beliebig geformt sein.

Bei dem Verfahren werden die Bereiche zwischen den optischen Funktionsflächen vorteilhaft durch eine mathematische Rechnung interpoliert und verstetigt, um einen kontinuierlichen Flächenverbund zu erzeugen, welcher in den Aperturen der einzelnen optischen Funktionsflächen jedoch exakt den ursprünglichen Höheninformationen entspricht. Die Verstetigung der einzelnen optischen Funktionsflächen zum Flächenverbund erfolgt typischerweise unter Berücksichtigung der lokalen Steigungen und Krümmungen. Die Anschlussbedingungen an die ursprünglichen Flächengeometrien müssen minimale Anstiege und Beschleunigungen garantieren, um bei der mikrozerspanenden Bearbeitung möglichst homogene Flächen mit geringen Mikrorauheiten zu erzeugen. Eine vorteilhafte Ausführung des Verfahrens sieht es vor, den erzeugten Flächenverbund sowohl als Grundlage für das mechanische Design des optischen Bauelements, beispielsweise als CAD-Fläche, als auch für die Bearbeitung zu nutzen.

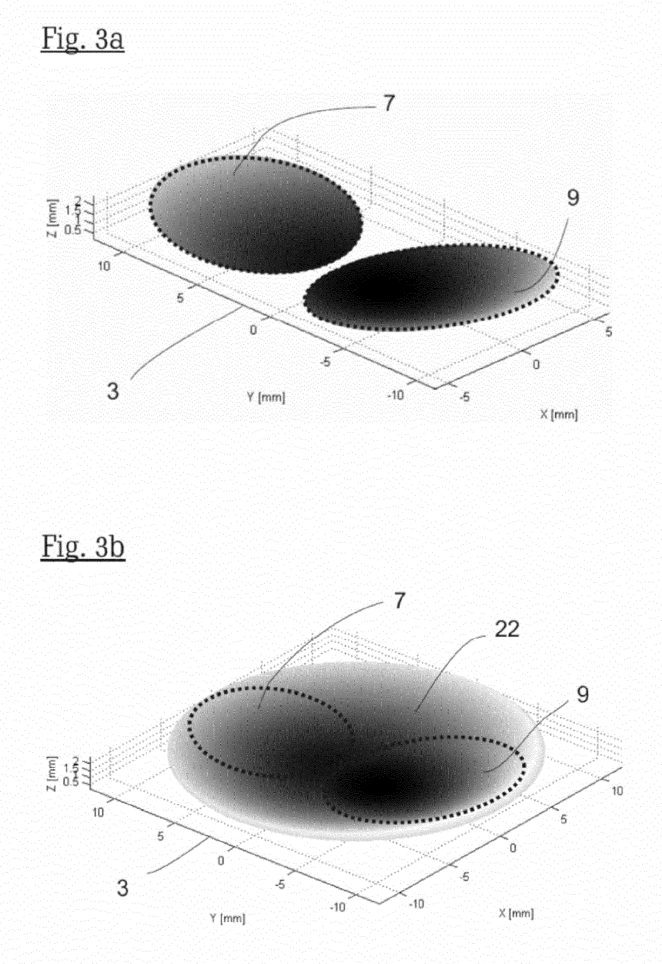

Fig. 3a und Fig. 3b zeigen beispielhaft Details zur Erzeugung eines Flächenverbunds 22 aus den einzelnen optischen Funktionsflächen 7, 9. Dazu sind in Fig. 3a die optischen Funktionsflächen 7, 9 des in Fig. 1a und Fig. 1b dargestellten optischen Bauteils 1 im gemeinsamen Bearbeitungskoordinatensystem 3 dargestellt. In Bezug zu den jeweiligen ursprünglichen Koordinatensystemen der optischen Funktionsflächen 7, 9 wurden beide optischen Funktionsflächen 7, 9 durch eine Koordinatentransformation in das Bearbeitungskoordinatensystem 3 überführt. Wie in Fig. 3b dargestellt, kann nun eine gemeinsame rotationssymmetrische Grundform gefunden werden, welche durch eine Optimierungsvorschrift die verbleibenden Differenzen zwischen den Höheninformationen der Einzelflächen und der gemeinsamen rotationssymmetrischen Grundform minimiert. Der verbleibende nicht-rotationssymmetrische Anteil (im Folgenden als "Freiformanteil" bezeichnet) bestimmt bei dem Herstellungsverfahren insbesondere die spindelsynchrone Zustellung des FTS- oder STS-Drehwerkzeugs. Die vorliegenden Höheninformationen werden nun in den Bereichen zwischen den optischen Funktionsflächen 7, 9 interpoliert und vorteilhafterweise auf einem gleichmäßigen Gitter auf die rotationssymmetrische Grundform addiert. Es ergibt sich ein Flächenverbund 22, welcher nun über den interessierenden Bearbeitungsbereich vollkommen definiert ist und in den Bereichen der optischen Funktionsflächen 7, 9 die unveränderten Höheninformationen zur Herstellung dieser Flächen in dem Bearbeitungskoordinatensystem enthält.

Im weiteren Verlauf des Verfahrens werden die erzeugten Flächenverbünde 7, 9 und 8, 10 durch eine geeignete hochauflösende Messtechnik in ihrer Form und Lagebeziehung vermessen. Die Vermessung kann dabei durch bekannte Verfahren der optischen Metrologie, wie z.B. Interferometrie, Deflektometrie oder einer taktilen Messmethode, durchgeführt werden. In dem Messprozess können in vorteilhafter Weise Form- und Lageabweichungen der Flächenverbünde 7, 9 und 8, 10 zu den Sollwerten ermittelt werden. Die ermittelten Abweichungen dienen als Grundlage für die Erstellung einer Korrekturbearbeitung. Dafür wird das optische Bauelement 1 bei dem Verfahren vorteilhaft erneut und reproduzierbar auf der Bearbeitungsmaschine 21 aufgenommen und eingerichtet. In weiteren mikrospanenden Bearbeitungsschritten werden nun die optischen Funktionsflächenverbünde 7, 9 und 8, 10 entsprechend der ermittelten Abweichung zur Sollgeometrie bearbeitet. Wenn nötig, kann eine iterative Schleife von Mess- und Bearbeitungszyklen durchlaufen werden, bis die erreichte Abweichung einen vorgegebenen Toleranzwert unterschreitet.

Wird eine vorteilhaft hochauflösende Messtechnik verwendet, welche die Messung der Relativlage zweier sich gegenüberliegender Flächenverbünde und somit der "Mittendicke" des optischen Bauteils ermöglicht, so kann nicht nur eine Korrektur der Form und Lage von mehreren Einzelflächen auf einem gemeinsamen Flächenverbund erfolgen, sondern auch die Korrektur der relativen Lage mehrerer Flächenverbünde zueinander.

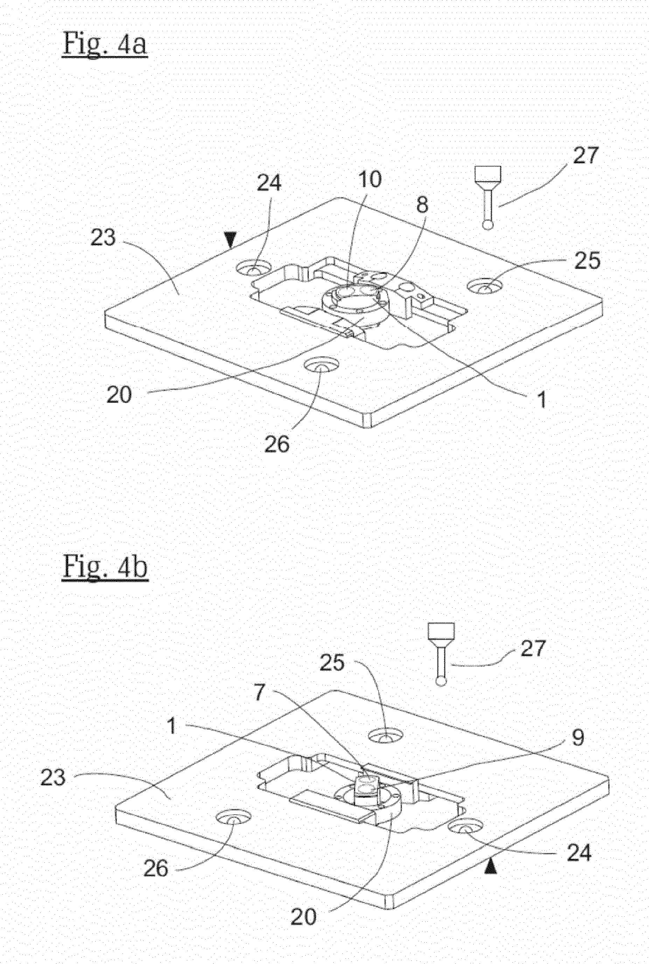

Fig. 4a und Fig. 4b zeigen beispielhaft die Vermessung des optischen Bauteils 1 mit einer vorzugsweise hochauflösenden, taktil punktuell oder scannend arbeitenden Messvorrichtung 27. Das optische Bauteil 1 ist während der Messung in einer Messhalterung 23 aufgenommen, welche über beidseitig anmessbare Referenzelemente 24, 25, 26 verfügt. Die Referenzelemente 24, 25, 26 sind gestellfest mit der Messhalterung 23 verbunden und bestehen in einer vorteilhaften Ausführung aus Standardkugeln, die beispielsweise aus einer Keramik mit präzisem und bekanntem Durchmesser gefertigt werden können. Die Messhalterung 23 ist so ausgeführt, dass das zu vermessende optische Bauteil 1 in seiner Halterung 20 beidseitig von der Messvorrichtung 27 vollständig erfasst werden kann. Zur Bestimmung des Form- und Lagefehlers der beiden Flächenverbünde 7, 9 und 8, 10 wird in einem ersten Messschritt nun mittels der Messvorrichtung 27 zunächst das optische Bauelement 1 auf der Seite der optischen Funktionsflächen 8, 10 taktil vermessen. Gleichzeitig werden ebenfalls die Positionen der externen, in der Messhalterung 23 integrierten, Referenzelemente 24, 25, 26 ermittelt (Fig. 4a).

Nach erfolgter Messung wird die Messhalterung 23 manuell oder automatisch so gedreht, dass nun der zweite Flächenverbund bestehend aus den optischen Funktionsflächen 7, 9 der Messvorrichtung 27 zugewendet ist. Während der Drehung muss durch die Messhalterung 23 sichergestellt sein, dass das aufgenommene optische Bauteil 1 keine relative Lageänderung erfährt, da diese später als Form- und/oder Lagefehler interpretiert würde. Nach der Drehung der Messhalterung 23 wird nun die zweite Seite des monolithischen optischen Bauelements 1 mit der Messvorrichtung 27 und wiederum in Bezug zu den externen Referenzelementen 24, 25, 26 taktil vermessen.

Eine beispielhafte Ausführungsmöglichkeit der Auswertung von taktil gemessenen Oberflächeninformationen soll nun im Folgenden näher erläutert werden. Nach der Durchführung beider Messdurchläufe sind Messinformationen zu den zwei gegenüberliegenden Flächenverbünden inklusive der vier optischen Funktionsflächen 7, 8, 9, 10, sowie die Positionen der externen Referenzelemente 24, 25, 26 aus beiden Messdurchläufen bekannt. Die Daten der optischen Funktionsflächen liegen typischerweise als Punktwolken im Koordinatensystem der Messvorrichtung 27 vor. Es kann nun durch verschiedene Transformationen und Optimierungen eine Vorschrift gefunden werden, welche die gemessenen Punktwolken der gegenüberliegenden Flächenverbünde in ein neues Koordinatensystem überführt, in dem eine minimale Abweichung der zuerst gemessenen optischen Funktionsflächen 8, 10 von ihrer Nominalform- und Position vorliegt (sog. "Best-Fit"-Einpassung). Die gefundene Vorschrift besteht beispielsweise aus einer allgemeinen Rotationsmatrix mit optimierten Parametern, welche auf die dreidimensionalen Messpunkte angewendet wird. Nach Transformation der Messpunkte ist auch die Position der Referenzelemente 24, 25, 26 im transformierten Koordinatensystem bekannt. Im zweiten Berechnungsschritt werden nun die Messdaten des zweiten Messschrittes inklusive der optischen Funktionsflächen 7, 9 in der Art transformiert, dass die Differenz zwischen den gemessenen Positionen der Referenzelemente 24, 25, 26 minimiert wird. Beide gemessenen Punktwolken liegen nun in einem gemeinsamen Koordinatensystem vor, wobei eine Zuordnung des zweiten Flächenverbundes 8, 10 zum ersten Flächenverbund 7, 9 mit hoher Genauigkeit vorhanden ist. Mögliche Form- und Lagefehler der Flächenverbünde zueinander können so evaluiert werden.

Die messtechnische Prüfung der Flächen des optischen Bauteils muss nicht zwingenderweise in Bezug zu extern gehalterten Referenzelementen 24, 25, 26 erfolgen. Wenn das zu bearbeitende Material des optischen Bauteils 1 zum Beispiel eine mikrospanende Bearbeitung ermöglicht, so können auch durch einen geeigneten Fertigungsprozess anmessbare Referenzelemente am Bauteil selbst gefertigt werden, welche als Referenzen für den nachfolgenden Messprozess dienen und eine exakte Ermittlung der Form- und Lagefehler ermöglicht. Für den Fall der direkt am optischen Bauteil 1 gefertigten Referenzelemente, erübrigt sich eine Halterung in einer speziellen Messhalterung 23 mit externen Referenzelementen 24, 25, 26.

Die Erfindung ist nicht durch die Beschreibung anhand der Ausführungsbeispiele beschränkt.

## Patentansprüche

1. Verfahren zur Herstellung eines optischen Bauteils (1) mit mindestens drei monolithisch angeordneten optischen Funktionsflächen (7, 8, 9, 10), wobei die optischen Funktionsflächen (7, 8, 9 ,10) eine erste und eine zweite optische Funktionsfläche (7, 9) auf einer ersten Seite des optischen Bauteils (1) und mindestens eine weitere optische Funktionsfläche (8, 10) auf einer zweiten Seite des optischen Bauteils (1) aufweisen,
umfassend die Schritte:
A) Berechnen eines stetigen Flächenverbunds (22), der die erste optische Funktionsfläche (7) und die zweite optische Funktionsfläche (9) umfasst,
B) Herstellen des stetigen Flächenverbunds (22), der die erste und die zweite optische Funktionsfläche (7, 9) in definierter Form und relativer Lage zueinander enthält, auf der ersten Seite des optische Bauteils (1) durch Bearbeitung mittels einer Bearbeitungsmaschine (21),
C) Herstellen mindestens einer außerhalb der optischen Funktionsflächen (7, 8, 9, 10) an dem optischen Bauteil (1) oder an einer Halterung (20) angeordneten, in definierter Lagebeziehung zu den optischen Funktionsflächen (7, 8, 9, 10) stehenden Referenzfläche (11, 12, 13, 14, 15) durch Bearbeitung mit der Bearbeitungsmaschine (21),
D) Umpositionieren des optischen Bauteils (1) derart, dass die zweite Seite des optischen Bauteils (1) mit der Bearbeitungsmaschine (21) bearbeitet werden kann, wobei die mindestens eine Referenzfläche (11, 12, 13, 14, 15) als Anlage- oder Montagefläche dient,
E) Herstellen der mindestens einen weiteren optischen Funktionsfläche (8, 10) auf der zweiten Seite des optischen Bauteils (1) in definierter Form und definierter relativer Lage zu den im ersten Prozessschritt hergestellten optischen Funktionsflächen (7, 9) durch eine Bearbeitung mit der Bearbeitungsmaschine (21),
F) Vermessen der Form und Lage der mindestens drei monolithisch angeordneten optischen Funktionsflächen (7, 8, 9, 10) in einem Messaufbau, wobei Informationen zur Abweichung der optischen Funktionsflächen (7, 8, 9, 10) von ihrer Sollform und -lage gewonnen werden, und
G) Wiederholen der Schritte der Bearbeitung der ersten und zweiten optischen Funktionsfläche (7, 9), des Umpositionierens des optischen Bauteils (1) und der Bearbeitung der mindestens einen weiteren optischen Funktionsfläche (8, 10), wobei die Informationen zur Abweichung der optischen Funktionsflächen (7, 8, 9, 10) von ihrer Sollform und -lage dazu genutzt werden, eine Korrekturbearbeitung der optischen Funktionsflächen (7, 8, 9, 10) zur Minimierung der ermittelten Form- und Lagefehler mit der Bearbeitungsmaschine (21) durchzuführen.

2. Verfahren nach Anspruch 1,
wobei die Schritte F) und G) mehrfach wiederholt werden, bis die Abweichung der optischen Funktionsflächen (7, 8, 9, 10) von ihrer Sollform und -lage eine vorgegebene Toleranz unterschreitet.

3. Verfahren nach einem der vorhergehenden Ansprüche, wobei die Bearbeitung mittels der Bearbeitungsmaschine (21) in mindestens einem der Schritte B), C), E) oder G) zumindest teilweise durch ein Drehwerkzeug (17) der Bearbeitungsmaschine (21) durchgeführt wird.

4. Verfahren nach einem der vorhergehenden Ansprüche, wobei die Bearbeitung mittels der Bearbeitungsmaschine (21) in mindestens einem der Schritte B), C), E) oder G) zumindest teilweise durch ein Fräs- oder Hobelwerkzeug der Bearbeitungsmaschine (21) durchgeführt wird.

5. Verfahren nach einem der vorhergehenden Ansprüche, wobei die Bearbeitung mittels der Bearbeitungsmaschine (21) in mindestens einem der Schritte B), C), G) oder E) durch eine aufeinanderfolgende oder abwechselnde Anwendung eines Dreh-, Fräs- oder Hobelwerkzeugs der Bearbeitungsmaschine (21) durchgeführt wird.

6. Verfahren nach einem der vorhergehenden Ansprüche, wobei die Bearbeitung mittels der Bearbeitungsmaschine (21) in mindestens einem der Schritte B), C), G) oder E) zumindest teilweise durch ein Schleif- und/oder Polierwerkzeug durchgeführt wird.

7. Verfahren nach einem der vorhergehenden Ansprüche, wobei zumindest zwei der optischen Funktionsflächen (7, 8, 9, 10) als transmissive optische Flächen wirken.

8. Verfahren nach einem der vorhergehenden Ansprüche, wobei zumindest eine der optischen Funktionsflächen (7, 8, 9, 10) als Spiegelfläche ausgebildet ist.

9. Verfahren nach einem der vorhergehenden Ansprüche, wobei zumindest eine der optischen Funktionsflächen (7, 8, 9, 10) eine Mikrostruktur aufweist, wodurch die optische Funktionsfläche (7, 8, 9, 10) als transmissives oder reflektives Gitter wirkt.

10. Verfahren nach einem der vorhergehenden Ansprüche, wobei die optischen Funktionsflächen (7, 8, 9, 10) zu einer gemeinsamen Bezugsachse nichtrotationssymmetrisch sind.

11. Verfahren nach einem der vorhergehenden Ansprüche, wobei die mindestens eine Referenzfläche (11, 12, 13, 14, 15) als Zylinderfläche oder Planfläche gebildet ist.

## Claims

1. A method for producing an optical component (1) having at least three monolithically arranged optical functional surfaces (7, 8, 9, 10), wherein the optical functional surfaces (7, 8, 9, 10) comprise a first and a second optical functional surface (7, 9) on a first side of the optical component (1) and at least one further optical functional surface (8, 10) on a second side of the optical component (1),
comprising the steps:
A) calculating a continuous surface composite (22), which includes the first optical functional surface (7) and the second optical functional surface (9),
B) producing the continuous surface composite (22), which contains the first and the second optical functional surface (7, 9) in a defined shape and relative position to one another, on the first side of the optical component (1) through machining by means of a machine tool (21),
C) producing at least one reference surface (11, 12, 13, 14, 15) arranged outside the optical functional surfaces (7, 8, 9, 19) on the optical component (1) or on a mount (20) and having a defined positional relation to the optical functional surfaces (7, 8, 9, 10) through machining by means of the machine tool (21),
D) repositioning the optical component (1) in such a way that the second side of the optical component (1) can be machined with the machine tool (21), wherein the at least one reference surface (11, 12, 13, 14, 15) serves as a contact surface or mounting surface,
E) producing the at least one further optical functional surface (8, 10) on the second side of the optical component (1) in a defined shape and defined relative position to the optical functional surfaces (7, 9) produced in the first machining step through a machining with the machine tool (21),
F) measuring the shape and position of the at least three monolithically arranged optical functional surfaces (7, 8, 9, 10) in a measuring setup, wherein information about the deviation of the optical functional surfaces (7, 8, 9, 10) from their desired shape and position is obtained, and
G) repeating the steps of machining the first and second optical functional surface (7, 9), repositioning the optical component (1) and machining of the at least one further optical functional surface (8, 10), wherein the information about the deviation of the optical functional surfaces (7, 8, 9, 10) from their desired shape and position is used to perform a corrective machining of the optical functional surfaces (7, 8, 9, 10) to minimize the determined shape and position errors with the machine tool (21) .

2. The method according to claim 1,
wherein the steps F) and G) are repeated multiple times until the deviation of the optical functional surfaces (7, 8, 9, 10) from their desired shape and position falls below a predetermined tolerance.

3. The method according to one of the preceding claims, wherein the machining by the machine tool (21) in at least one of the steps B), C), E) or G) is carried out at least partially by a turning tool (17) of the machine tool (21).

4. The method according to one of the preceding claims, wherein the machining by means of the machine tool (21) in at least one of the steps B), C), E) or G) is carried out at least partially by a milling or planing tool of the machine tool (21).

5. The method according to one of the preceding claims, wherein the machining by means of the machine tool (21) in at least one of the steps B), C), G) or E) is performed by successive or alternating use of a turning, milling or planing tool of the machine tool (21).

6. The method according to one of the preceding claims, wherein the machining by means of the machine tool (21) in at least one of the steps B), C), G) or E) is carried out at least partially by a grinding tool and/or polishing tool.

7. The method according to one of the preceding claims, wherein at least two of the optical functional surfaces (7, 8, 9, 10) function as transmissive optical surfaces.

8. The method according to one of the preceding claims, wherein at least one of the optical functional surfaces (7, 8, 9, 10) is configured as a mirror surface.

9. The method according to one of the preceding claims, wherein at least one of the optical functional surfaces (7, 8, 9, 10) comprises a microstructure, whereby the optical functional surface (7, 8, 9, 10) functions as a transmissive or reflective grating.

10. The method according to one of the preceding claims, wherein the optical functional surfaces (7, 8, 9, 10) are non-rotationally-symmetrical to a common reference axis.

11. The method according to one of the preceding claims, wherein the at least one reference surface (11, 12, 13, 14, 15) is formed as a cylinder surface or flat surface.

## Revendications

1. Un procédé de fabrication d'un composant optique (1) avec au moins trois surfaces fonctionnelles optiques (7, 8, 9, 10) disposées de manière monolithique, les surfaces fonctionnelles optiques (7, 8, 9, 10) présentant une première et une deuxième surface fonctionnelle optique (7, 9) sur un premier côté du composant optique (1) et au moins une autre surface fonctionnelle optique (8, 10) sur un deuxième côté du composant optique (1),
comprenant les étapes suivantes :
A) Calculer un assemblage de surfaces continu (22) qui comprend la première surface fonctionnelle optique (7) et la deuxième surface fonctionnelle optique (9),
B) Fabriquer le composite de surface continu (22), qui contient la première et la deuxième surface fonctionnelle optique (7, 9) dans une forme définie et une position relative l'une par rapport à l'autre, sur le premier côté du composant optique (1) par usinage au moyen d'une machine d'usinage (21),
C) Fabriquer au moins une surface de référence (11, 12, 13, 14, 15) disposée à l'extérieur des surfaces fonctionnelles optiques (7, 8, 9, 10) sur le composant optique (1) ou sur un support (20) et se trouvant dans une relation de position définie par rapport aux surfaces fonctionnelles optiques (7, 8, 9, 10) par usinage avec la machine d'usinage (21),
D) Repositionner le composant optique (1) de manière à ce que le deuxième côté du composant optique (1) puisse être usiné avec la machine d'usinage (21), la au moins une surface de référence (11, 12, 13, 14, 15) servant de surface d'appui ou de montage,
E) Fabriquer la au moins une autre surface fonctionnelle optique (8, 10) sur le deuxième côté du composant optique (1) dans une forme définie et une position relative définie par rapport aux surfaces fonctionnelles optiques (7, 9) fabriquées dans la première étape du processus par un usinage avec la machine d'usinage (21),
F) Mesurer la forme et la position des au moins trois surfaces fonctionnelles optiques (7, 8, 9, 10) disposées de manière monolithique dans un montage de mesure, où des informations sur l'écart des surfaces fonctionnelles optiques (7, 8, 9, 10) par rapport à leur forme et position de consigne sont obtenues, et
G) Répéter les étapes d'usinage de la première et de la deuxième surface fonctionnelle optique (7, 9), de repositionnement du composant optique (1) et d'usinage d'au moins une autre surface fonctionnelle optique (8, 10), où les informations sur l'écart des surfaces fonctionnelles optiques (7, 8, 9, 10) par rapport à leur forme et position de consigne sont utilisées pour effectuer un usinage de correction des surfaces fonctionnelles optiques (7, 8, 9, 10) pour minimiser les erreurs de forme et de position déterminées avec la machine d'usinage (21).

2. Le procédé selon la revendication 1,
dans lequel les étapes F) et G) sont répétées plusieurs fois jusqu'à ce que l'écart des surfaces fonctionnelles optiques (7, 8, 9, 10) par rapport à leur forme et position de consigne soit inférieur à une tolérance prédéfinie.

3. Le procédé selon l'une quelconque des revendications précédentes, dans lequel l'usinage au moyen de la machine d'usinage (21) dans au moins l'une des étapes B), C), E) ou G) est effectué au moins partiellement par un outil de tournage (17) de la machine d'usinage (21).

4. Le procédé selon l'une quelconque des revendications précédentes, dans lequel l'usinage est réalisé au moyen de la machine d'usinage (21), dans au moins l'une des étapes B), C), E) ou G), au moins en partie par un outil de fraisage ou de rabotage de la machine d'usinage (21).

5. Le procédé selon l'une quelconque des revendications précédentes, dans lequel l'usinage est réalisé au moyen de la machine d'usinage (21) dans au moins l'une des étapes B), C), G) ou E) par une application successive ou alternée d'un outil de tournage, de fraisage ou de rabotage de la machine d'usinage (21).

6. Le procédé selon l'une quelconque des revendications précédentes, dans lequel l'usinage est réalisé au moyen de la machine d'usinage (21), dans au moins une des étapes B), C), G) ou E), au moins en partie par un outil de ponçage et/ou de polissage.

7. Le procédé selon l'une quelconque des revendications précédentes, dans lequel au moins deux des surfaces optiques fonctionnelles (7, 8, 9, 10) agissent comme des surfaces optiques transmissives.

8. Le procédé selon l'une quelconque des revendications précédentes, dans lequel au moins l'une des surfaces fonctionnelles optiques (7, 8, 9, 10) est conçue comme une surface miroir.

9. Le procédé selon l'une quelconque des revendications précédentes, dans lequel au moins l'une des surfaces fonctionnelles optiques (7, 8, 9, 10) présente une microstructure, ce qui fait que la surface fonctionnelle optique (7, 8, 9, 10) agit comme un réseau transmissif ou réfléchissant.

10. Le procédé selon l'une quelconque des revendications précédentes, dans lequel les surfaces fonctionnelles optiques (7, 8, 9, 10) ne présentent pas de symétrie de rotation par rapport à un axe de référence commun.

11. Le procédé selon l'une quelconque des revendications précédentes, dans lequel l'au moins une surface de référence (11, 12, 13, 14, 15) est formée comme une surface cylindrique ou une surface plane.
